# FASCICULE DE BREVET EUROPEEN

(11) **EP 0 611 180 B1**
(45) Date de publication et mention de la délivrance du brevet: **26.03.1997**
(21) Numéro de dépôt: 94400163.5
(22) Date de dépôt: 26.01.1994
(51) Int. Cl.: C04B 35/58, C01B 21/082, C04B 41/50

(54) **Procédé d'obtention d'un matériau céramique à base de Sialon par réduction d'un précurseur aluminosilicaté et application à la formation de revêtement céramique sur un substrat réfractaire**
Verfahren zur Herstellung eines auf Sialon basierenden keramischen Materials durch Reduktion von einem Alumosilikat-vorprodukt und seine Verwendung zur keramischen Beschichtung eines feuerfesten Substrats
Process for obtaining a sialon containing ceramic material by reduction of an aluminosilicate precursor and use thereof for applying a ceramic coating onto a refractory substrate

(30) Priorité: 08.02.1993 FR 9301360
(43) Date de publication de la demande: 17.08.1994
(73) Titulaire: SOCIETE EUROPEENNE DE PROPULSION, 92150 Suresnes (FR)
(72) Inventeur: Thebault, Jacques, F-33200 Bordeaux (FR); Seron, Alain M, F-45510 Vienne en Val (FR); Beguin, François A., F-45160 Olivet (FR)
(74) Mandataire: Joly, Jean-Jacques

(56) Documents cités:
- EP-A- 0 023 869
- EP-A- 0 290 076
- JP-A- 4 016 562
- JP-A-62 223 063
- US-A- 4 986 972
- CHEMICAL ABSTRACTS, vol. 116, no. 22, 1 Juin 1992, Columbus, Ohio, US; abstract no. 220230d, HANAOKA OSAMU & AL 'Manufacture of silicon nitride ceramics with improved high-temperature strengh' page 375 ;colonne D ;
- DATABASE WPI Week 9221, Derwent Publications Ltd., London, GB; AN 92-170066 & JP-A-4 091 226 (TOSHIBA CERAMICS CO) 24 Mars 1992
- DATABASE WPI Week 9105, Derwent Publications Ltd., London, GB; AN 91-032091 & JP-A-2 300 319 (TOSHIBA CERAMICS KK) 12 Décembre 1990
- CHEMICAL ABSTRACTS, vol. 107, no. 26, 28 Décembre 1987, Columbus, Ohio, US; abstract no. 241533j, SHIMADA TOYOICHI & AL. 'Surface densification of graphite crucibles' page 303 ;
- PATENT ABSTRACTS OF JAPAN vol. 5, no. 140 (C-070)4 Septembre 1981 & JP-A-56 073 604 (TOSHIBA CORP.) 18 Juin 1981

## Description

La présente invention concerne l'obtention d'un matériau céramique à base de Sialon, c'est-à-dire un matériau céramique contenant majoritairement du Sialon. Par Sialon on entend un matériau appartenant au système silicium, aluminium, oxygène, azote (Si, Al, O, N).

Les matériaux céramiques à base de Sialon sont bien connus pour les bonnes propriétés physicochimiques et mécaniques, en particulier leur bonne résistance en atmosphère corrosive (notamment en milieu oxydant).

Différents procédés d'élaboration de Sialon sont connus, principalement pour l'obtention de pièces massives.

Les procédés connus font généralement appel soit à la synthèse directe à partir d'un mélange de poudres, soit à la réduction d'un précurseur aluminosilicaté.

Pour la synthèse directe, un mélange de poudres de nitrure de silicium, nitrure d'aluminium, silice et alumine (Si₃N₄, AlN, SiO₂, Al₂O₃) est compacté sous pression élevée et fritté à très haute température (1 700 à 1 800°C). Le frittage peut être réalisé sous charge, ou avec incorporation d'additif, tel que de l'oxyde d'yttrium (Y₂O₃). Ce procédé présente l'inconvénient de nécessiter des matières premières d'un coût assez élevé et un traitement à très haute température. En outre, il convient pour l'obtention de pièces denses, mais n'est pas utilisable pour former des revêtements à base de Sialon sur des substrats.

Plusieurs procédés d'obtention de Sialon par réduction d'un précurseur aluminosilicaté font appel au carbone comme agent réducteur. Le précurseur aluminosilicaté peut consister en un mélange mécanique d'oxydes tels que silice et alumine, ou en un mélange synthétique par exemple obtenu par voie sol-gel, ou en un mélange naturel, en particulier un composé choisi parmi ceux connus globalement sous le nom d'argiles.

La carboréduction demande un contact intime entre le précurseur aluminosilicaté et le carbone. Cela peut être obtenu par mélange intime du précurseur avec de la poudre de carbone (noir de carbone) ou par voie chimique en utilisant des composés d'insertion. Dans ce dernier cas, le précurseur utilisé est une argile dont la caractéristique structurale feuilletée permet d'insérer, entre les feuillets, des molécules organiques (par exemple acrylonitrile) qui, par pyrolyse, constituent la source de carbone nécessaire à la réduction. Cette dernière technique permet d'obtenir par carboréduction un β-Sialon à une température (environ 1 100°C) plus basse que celle nécessaire (environ 1 350°C à 1 450°C) à partir d'un mélange mécanique de précurseur aluminosilicaté et de poudre de carbone.

Un autre procédé d'obtention de Sialon par carboréduction de zéolites à une température de 1350°C à 1700°C et sous une atmosphère essentiellement d'azote additionnée éventuellement de petites quantités d'oxygène, d'hydrogène ou de dioxyde de carbone est décrit dans le document DE-A-0 290 076. Le carbone servant à la carboréduction peut être apporté de différentes façons, y compris à partir de précurseurs gazeux.

Un inconvénient des procédés de carboréduction ci-dessus réside dans la difficulté de contrôler précisément le taux de carbone, donc le taux de réduction. Un autre inconvénient, résultant de l'inclusion du carbone dans le composé de départ, consiste dans l'obtention de céramique poreuse en raison du dégagement inévitable de monoxyde de carbone pendant la réduction.

D'autres procédés connus proposent d'obtenir un Sialon par réduction d'un précurseur aluminosilicaté par de l'ammoniac (NH₃) ou un mélange d'ammoniac et d'hydrogène H₂. Comme précédemment, le précurseur peut être un mélange mécanique de poudres SiO₂ et Al₂O₃ ou une argile. Ces procédés permettent de travailler à une température d'environ 1 000°C, donc inférieure à celles utilisées pour la carboréduction. Toutefois, il a été mis en évidence par la déposante que ces procédés aboutissent en fait à une céramique constituée essentiellement non pas de Sialon, mais d'un mélange de mullite et de cristobalite.

Enfin, d'autres procédés connus proposent d'utiliser un précurseur polyaluminocarbosilane pour obtenir du Sialon par traitement sous ammoniac à environ 1400°C à 1500°C, ou d'utiliser des mélanges d'opalite et d'aluminium pour obtenir du Sialon par décharge électrique sous atmosphère d'azote à 1 750°C.

La présente invention a pour but de fournir un nouveau procédé d'obtention d'un matériau céramique à base de Sialon par réduction d'un précurseur aluminosilicaté.

L'invention a plus particulièrement pour but de fournir un procédé permettant d'obtenir du β'-Sialon, ou des mélanges de β'-Sialon et de nitrure d'aluminium dans des proportions modulables. Par β'-Sialon, on entend ici un composé dont la formule générale est de la forme Si₆₋ₜ AlₜOₜN₈₋ₜ dans laquelle t peut varier entre 0 et 4,2. on entend ici un composé dont la formule générale est de la forme Si₆₋ₜ AlₜOₜN₈₋ₜ dans laquelle t peut varier entre 0 et 4,2.

Un autre but de l'invention est de fournir un procédé grâce auquel une céramique à base de Sialon peut être obtenue sous diverses formes souhaitables : poudre, pièce massive, revêtement épais, film mince de revêtement, fibres.....

L'invention a encore pour but de fournir un procédé grâce auquel il est possible de former un revêtement dense et adhérent sur un substrat céramique réfractaire, que celui-ci soit massif ou fibreux, ce que ne permettent pas d'obtenir les procédés de l'art antérieur.

Un autre but de l'invention est aussi de fournir un procédé permettant de former un revêtement d'interphase sur les fibres d'une préforme fibreuse destinée à la fabrication d'une pièce en matériau composite, la préforme étant ensuite densifiée par une matrice réfractaire, ou encore permettant de réaliser un matériau composite ayant une matrice totalement ou partiellement à base de Sialon.

Ces buts, et d'autres buts, sont atteints grâce à un procédé selon lequel, conformément à l'invention, le précurseur aluminosilicaté est réduit par une phase gazeuse comprenant essentiellement un mélange d'hydrogène et d'azote, lequel mélange est dopé par un composé carboné dont la proportion dans la phase gazeuse est limitée de manière à éviter la formation de carbone élémentaire.

Par composé carboné, on entend un composé contenant du carbone et se trouvant à l'état gazeux dans les conditions opératoires du traitement.

Par exemple et d'une façon non limitative, ce peut être bien évidemment un gaz (par exemple le méthane) ou un liquide qui s'évapore (par exemple le benzène) ou un solide qui se sublime ou réagit préalablement avec la phase gazeuse.

Il a été mis en évidence que la présence d'un composé carboné dans la phase gazeuse composée essentiellement de H₂ et N₂, est nécessaire pour obtenir du Sialon ou un mélange de Sialon et AlN. Différents composés carbonés peuvent être utilisés, choisis parmi les composés susceptibles d'apporter du carbone par voie gazeuse à la température à laquelle le procédé est mis en oeuvre, c'est-à-dire 1100°C ou plus. Ces composés comprennent notamment les hydrocarbures, en particulier les alcanes.

Toutefois, la proportion de composé carboné dans la phase gazeuse doit rester limitée pour ne pas conduire, dans les conditions de température et de qu'obtenu par dépôt chimique en phase vapeur). De préférence, le composé carboné est un gaz contenant du carbone sous forme combinée, dont la proportion dans la phase gazeuse est inférieure à 3 % en volume.

L'utilisation d'un mélange réducteur H₂ + N₂ permet avantageusement d'ajuster le pouvoir réducteur par réglage des quantités relatives de H₂ et de N₂. Ainsi, il est possible d'obtenir du Sialon ou un mélange de Sialon et AlN dans des proportions ajustables. D'une façon générale, les quantités respectives de H₂ et de N₂ sont, en volume, dans un rapport compris entre 0,1 et 10.

La température à laquelle le procédé selon l'invention est mis en oeuvre est de préférence comprise entre 1100°C et 1400°C. Elle peut être abaissée jusqu'à 1000°C, c'est-à-dire 350 à 400°C plus basse que celle nécessaire pour le procédé de carboréduction.

Le procédé selon l'invention présente l'avantage de permettre l'obtention d'une céramique à base de Sialon sous différentes formes possibles : céramique massive, couche de revêtement d'un substrat réfractaire, film mince de revêtement de fibres, matrice d'un matériau composite à renfort fibreux; ou encore sous forme de fibre.

En partant d'un mélange de poudres, notamment de SiO₂ et Al₂O₃ ou d'argile, une poudre de Sialon ou de Sialon + AlN peut être obtenue qui, par des techniques connues, notamment le frittage, permet l'obtention de pièces massives.

Une application intéressante du procédé selon l'invention réside dans la formation d'un revêtement à base de Sialon sur un substrat réfractaire massif ou fibreux. Un tel revêtement peut notamment constituer une couche de protection anti-oxydation. Par substrat réfractaire on entend des composés ayant un point de fusion supérieur à la température utilisée pour la réaction de formation du Sialon, en particulier, le carbure de silicium et le carbone sous forme de matériaux composites tels que SiC/SiC, C/SiC, C/C, ... Lorsqu'il est formé sur un substrat fibreux, le revêtement à base de Sialon peut constituer une interphase d'adaptation entre les fibres du substrat fibreux, utilisé comme renfort ou préforme d'un matériau composite, et la matrice de ce dernier.

Pour former un tel revêtement, le précurseur aluminosilicaté est mis en suspension dans un véhicule liquide, par exemple de l'acétone, un alcool ou de l'eau. Cette suspension est déposée à la surface d'un substrat massif à revêtir, ou introduite par imprégnation au sein d'un substrat fibreux. La réduction par le mélange H₂ + N₂ dopé par un composé carboné est réalisée après élimination du véhicule liquide. L'imprégnation d'un substrat fibreux constituant une préforme d'un matériau composite permet ainsi de former un revêtement d'interphase à base de Sialon sur les fibres, voire même de constituer une matrice complète à base de Sialon. Dans ce dernier cas plusieurs cycles successifs comprenant l'imprégnation par la suspension, l'élimination du véhicule liquide et le traitement de réduction peuvent être nécessaires.

Pour la mise en oeuvre du procédé selon l'invention, le précurseur aluminosilicaté utilisé peut consister en un mélange mécanique de poudres de SiO₂ et Al₂O₃, ou en un mélange de telles poudres obtenu de façon connue en soi par un procédé sol-gel ou en une argile ou un mélange d'argiles sous forme de poudre, ou encore en une fibre silicoalumineuse.

Différentes argiles peuvent être utilisées, telles que kaolinite, montmorillonite, kyanite, sillimanite, ... Ces argiles ont une texture feuilletée, ou lamellaire, qui est partiellement conservée après transformation en Sialon ou Sialon + AlN. Aussi, l'utilisation de telles argiles est avantageuse pour la réalisation de couches d'interphase entre renfort fibreux et matrice de matériaux composites, notamment de matériaux composites à matrice céramique. En effet, comme décrit dans le document EP-A-0 172 082, l'interposition d'une couche de revêtement à structure feuilletée, ou lamellaire, entre fibres du renfort et matrice, permet d'optimiser les propriétés mécaniques du matériau composite.

Lorsque le précurseur est constitué par une fibre silicoalumineuse, le procédé selon l'invention permet sa transformation en une fibre Sialon ou Sialon + AlN.

Des exemples de mise en oeuvre du procédé selon l'invention seront décrits ci-après à titre indicatif mais non limitatif.

Il sera fait référence aux dessins annexés sur lesquels :
- la figure 1 illustre très schématiquement un premier mode de mise en oeuvre du procédé selon l'invention,
- la figure 2 illustre très schématiquement un deuxième mode de mise en oeuvre du procédé selon l'invention, et
- les figures 3 à 5 sont des courbes montrant les résultats d'analyse spectrale aux rayons X de matériaux obtenus par procédés conformes ou non à l'invention.

Le schéma global de formation de Sialon ou de mélange Sialon et AlN par le procédé selon l'invention est donné ci-après. Dans ce schéma, x, y et z désignent les quantités respectives de H₂, N₂ et de composé carboné à l'état gazeux, et u, v et w désignent les quantités respectives produites de Sialon, AlN et eau.
Précurseur aluminosilicaté + xH₂ + yN₂ + zcomposé carboné ou gazeux → uSialon+vAlN + wH₂O

Cette réaction est mise en oeuvre à une température supérieure ou égale à environ 1 100°C, de préférence ne dépassant pas 1 400°C, et sous pression atmosphérique. La durée de la réaction est de plusieurs heures.

Le précurseur aluminosilicaté est un mélange de poudres SiO₂ et Al₂O₃ obtenu par voie mécanique ou par voie sol-gel, ou une argile (kaolinite ou montmorillonite, par exemple) ou une fibre silicoalumineuse.

Les quantités relatives de H₂ et N₂ sont déterminées pour ajuster le pouvoir réducteur en fonction des proportions relatives de Sialon et AlN désirées dans la céramique obtenue. En pratique, les quantités respectives en volume x et y sont dans un rapport compris entre 1 et 3.

Le composé carboné gazeux utilisé est une alcane, par exemple du méthane.

La proportion en volume d'alcane est limitée pour éviter la formation de carbone élémentaire. Cette proportion est inférieure à 3 %, de préférence inférieure à 1 %.

Les quantités respectives u et v de Sialon et d'AlN obtenus dépendent du rapport x/y.

Différents exemples de mise en oeuvre du procédé selon l'invention seront maintenant décrits.

### Example 1

### Elaboration d'une poudre céramique constituée d'un mélange de gazeux β'-Sialon et d'AlN

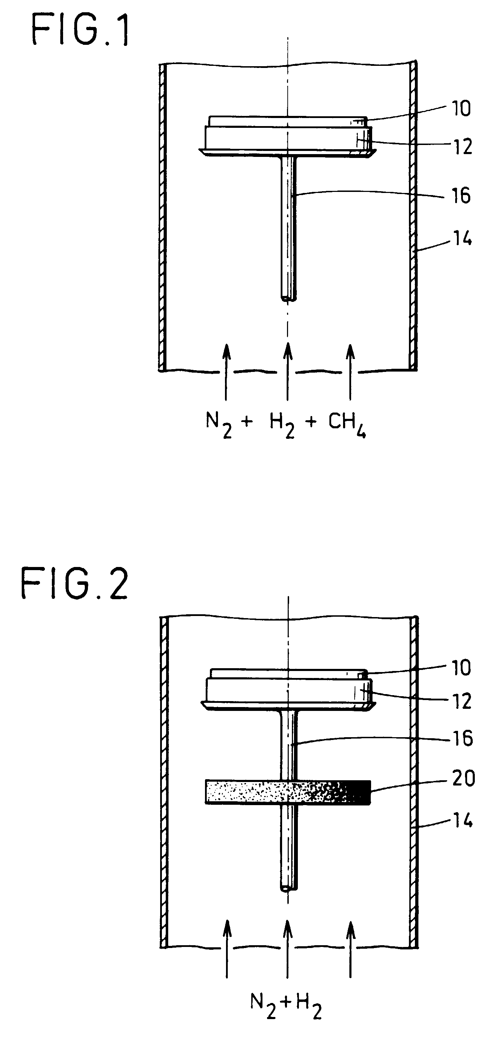

Dans cet exemple, le précurseur aluminosilicaté est un mélange de poudres de SiO₂ et Al₂O₃ obtenu par voie sol-gel, le rapport atomique entre silicium et aluminium Si/Al étant égal à 2. Le précurseur 10 est placé sur un substrat réfractaire 12 et introduit dans un four 14, sur un support 16 (figure 1).

La température à l'intérieur du four est portée à 1 350°C et une phase gazeuse contenant un mélange de H₂, N₂ et méthane est admis à la partie inférieure du four. Dans cette phase gazeuse, le rapport en volume entre H₂ et N₂ est égal à 3 et le méthane représente 0,3 % en volume. Les produits de réaction gazeux sont extraits à la partie supérieure du four.

Un flux gazeux continu est maintenu pendant 2 h, la pression dans le four étant égale à la pression atmosphérique.

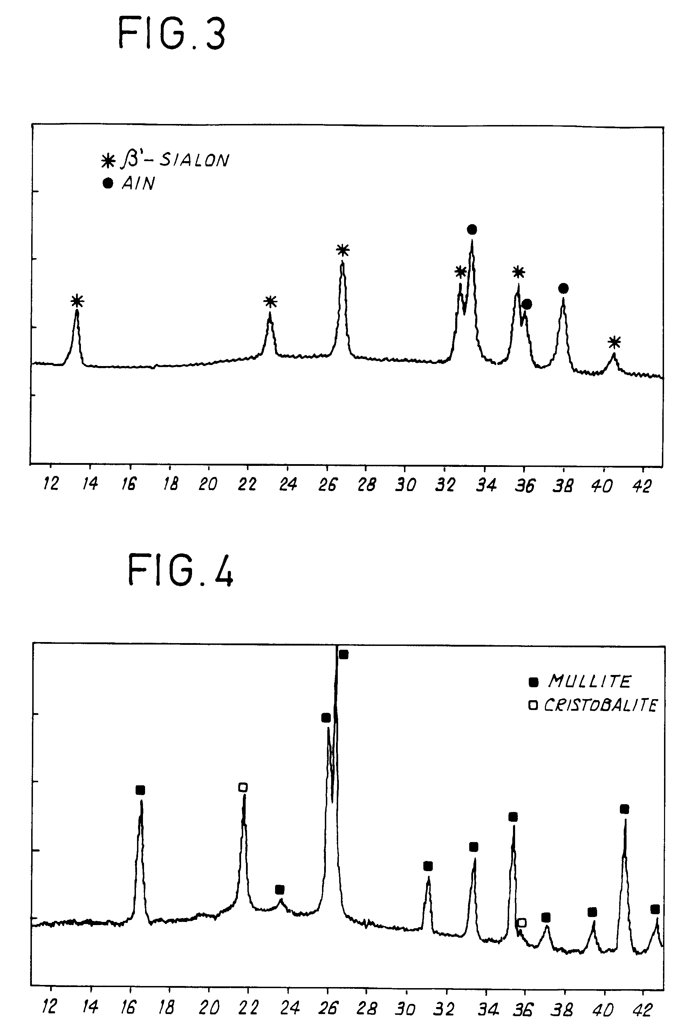

En fin de réaction, le précurseur est transformé en une poudre céramique constituée par un mélange de β'-Sialon et AlN, ce qui est confirmé par analyse spectrale aux rayons X (figure 3).

### Exemple comparatif 1A

A titre de comparaison, il est procédé exactement comme dans l'exemple 1, à la seule différence que du méthane n'est pas introduit dans la phase gazeuse.

En fin de réaction, le précurseur est transformé en un mélange de mullite et de cristobalite, aucune trace de Sialon n'étant présente, ce qui est confirmé par analyse spectrale aux rayons X (figure 4)

Cet exemple établit la nécessité de la présence de composé carboné dans la phase gazeuse réductrice.

### Exemple comparatif 1B

A titre de comparaison, il est procédé exactement comme dans l'exemple 1, le méthane représentant alors 3,1 % en volume de la phase gazeuse. En fin de réaction, la formation d'un film continu de carbone est observée à la surface de l'échantillon, ce qui empêche la formation de β'-Sialon.

### Exemple 2

Il est procédé comme dans l'exemple 1, mais en disposant, dans le four 14, en amont du substrat 12 portant le précurseur 10, une matière carbonée constituée par un bloc de graphite 20 (figure 2). La phase gazeuse est constituée d'un mélange de H₂ + N₂, sans ajout de composé carboné.

En fin de réaction, le précurseur est transformé en un mélange de β'-Sialon, et d'AlN, comme dans l'exemple 1.

Le bloc de graphite 20 permet, par réaction avec l'hydrogène contenu dans la phase gazeuse, de produire le méthane nécessaire à la production de Sialon.

La présence du méthane a pu être mise en évidence par spectrométrie de masse.

Cet exemple selon l'invention illustre une variante dans laquelle le gaz contenant du carbone est généré in situ par réaction en amont.

### Exemple 3

### Elaboration d'un revêtement de β'-Sialon compact et adhérant à un matériau C/SiC

Une pièce en matériau composite C/SiC (comprenant un renfort en fibres de carbone et une matrice en carbure de silicium) est munie, sur sa surface externe en carbure de silicium, d'un revêtement de β'-Sialon de la façon suivante.

Un précurseur aluminosilicaté constitué par de la kaolinite est mis en suspension dans de l'eau et est déposé sur la surface de la pièce composite à revêtir. Après évaporation de l'eau, la pièce munie du revêtement kaolinite est traitée à 1 200°C pendant 48 h dans une atmosphère comprenant un mélange H₂/N₂ (dans une proportion en volume H₂/N₂=3/1) additionné de 0,3 % en volume de méthane.

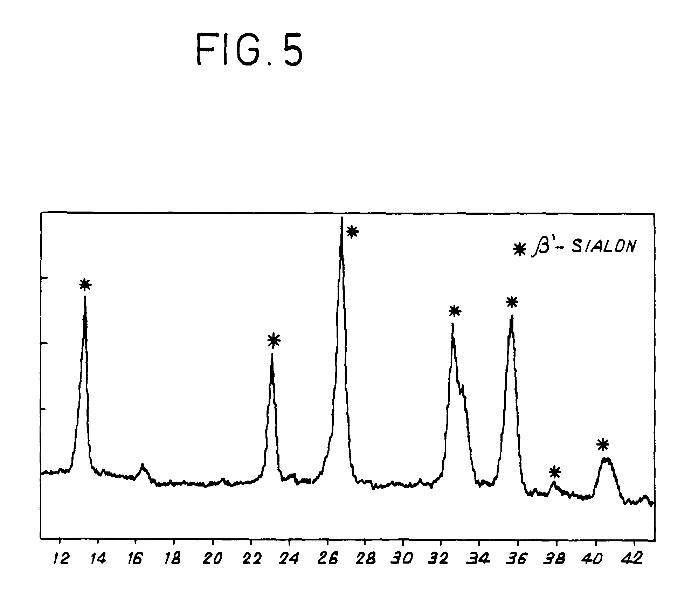

En fin de traitement, le revêtement obtenu est constitué majoritairement de β'-Sialon ce qui est confirmé par analyse spectrale aux rayons X (figure 5). Un revêtement compact, adhérant au substrat C/SiC et d'une épaisseur régulière d'environ 50 microns, est ainsi obtenu.

En outre, il est observé que le revêtement à base de β'-Sialon conserve l'aspect feuilleté de l'argile précurseur.

### Exemple 4

### Elaboration de fibres constituées majoritairement de β-Sialon

Le précurseur aluminosilicaté est une fibre silicoalumineuse du type de celle commercialisée par la société des Etats-Unis d'Amérique 3M sous la dénomination Nextel 440. Cette fibre est traitée à 1 200°C pendant 24 h dans une atmosphère constituée d'un mélange H₂/N₂ (dans une proportion en volume H₂/N₂ = 3/1) additionné de 0,3 % en volume de méthane. Après traitement, une fibre majoritairement constituée de β'-Sialon est obtenue.

### Exemple 5

### Elaboration d'un revêtement d'interphase sur une préforme en fibres SiC

Dans cet exemple, il s'agit de munir les fibres d'un substrat ou préforme en fibres SiC d'un mince revêtement d'interphase en céramique à base de Sialon, avant densification de la préforme par une matrice pour constituer une pièce en matériau composite.

La préforme est en fibres à base de carbure de silicium telles que celles commercialisées sous la dénomination Nicalon NL202 par la société japonaise Nippon Carbon.

Le précurseur est une argile du type kaolinite mise en suspension dans de l'eau. La préforme en fibres SiC est imprégnée par la suspension. Après élimination de l'excédent d'eau par évaporation, la préforme est traitée dans les mêmes conditions que celles de l'exemple 3.

Après traitement, les fibres sont individuellement revêtues d'un film céramique constitué majoritairement de Sialon, conservant la structure feuilletée de l'argile de départ.

La préforme ainsi revêtue est densifiée par une matrice, par exemple une matrice céramique. La densification est réalisée de façon connue en soi, notamment par infiltration chimique en phase vapeur, par exemple de SiC, ou par imprégnation au moyen d'une composition liquide contenant un précurseur de la matrice, par exemple du polycarbosilane, et transformation du précurseur.

Dans le matériau composite obtenu, le film de céramique à base de Sialon formé sur les fibres agit en tant qu'interphase entre les fibres et la matrice pour assurer, notamment grâce à sa structure lamellaire, une déviation des fissures qui se propagent dans la matrice jusqu'à l'interphase et une relaxation des contraintes à fond de fissures. L'interphase améliore donc la résistance au choc, tout en assurant le nécessaire transfert de charges entre matrice et fibres.

Dans cet exemple, l'imprégnation de la préforme fibreuse par la suspension de kaolinite vise à obtenir un mince revêtement d'interphase sur les fibres. La répétition des phases d'imprégnation par la suspension, évaporation de l'eau et réduction, jusqu'à densification aussi complète que possible de la préforme, permet d'obtenir un matériau composite à nature céramique majoritairement constitué de Sialon.

## Revendications

1. Procédé d'obtention d'un matériau céramique à base de Sialon par mise en présence d'un précurseur aluminosilicaté avec une phase gazeuse comprenant de l'azote, de l'hydrogène et un composé carboné,
caractérisé en ce que le précurseur est réduit par une phase gazeuse contenant essentiellement un mélange d'hydrogène et d'azote, lequel mélange est dopé par un composé carboné dont la proportion dans la phase gazeuse est limitée de manière à éviter la formation de carbone élémentaire.

2. Procédé selon la revendication 1, caractérisé en ce que le composé carboné est un gaz, contenant du carbone sous forme combinée, dont la proportion en volume dans la phase gazeuse est inférieure à 3%.

3. Procédé selon l'une quelconque des revendications 1 et 2, caractérisé en ce que le composé carboné est un hydrocarbure.

4. Procédé selon l'une quelconque des revendications 1 à 3, caractérisé en ce que le composé carboné est un alcane.

5. Procédé selon l'une quelconque des revendications 1 à 4, caractérisé en ce que les proportions respectives en volume d'hydrogène et d'azote dans la phase gazeuse sont dans un rapport compris entre 0,1 et 10.

6. Procédé selon l'une quelconque des revendications 1 à 5, caractérisé en ce que la réduction du précurseur est réalisée à une température au moins égale à 1100°C.

7. Procédé selon l'une quelconque des revendications 1 à 6, caractérisé en ce que le précurseur est placé dans une enceinte dans laquelle est introduit un flux gazeux comprenant le mélange d'hydrogène et d'azote additionné du composé carboné.

8. Procédé selon l'une quelconque des revendications 1 à 6, caractérisé en ce que le précurseur est placé dans une enceinte dans laquelle est introduit un flux gazeux contenant le mélange d'hydrogène et d'azote, une matière solide carbonée étant disposée dans l'enceinte sur le trajet du flux gazeux en amont du précurseur.

9. Procédé selon l'une quelconque des revendications 1 à 8, caractérisé en ce que le précurseur aluminosilicaté est une argile.

10. Procédé selon l'une quelconque des revendications 1 à 8, caractérisé en ce que le précurseur est sous forme d'une poudre.

11. Procédé selon la revendication 10, caractérisé en ce que le précurseur est choisi parmi un mélange de poudres d'alumine et de silice obtenu par voie sol-gel.

12. Procédé selon l'une quelconque des revendications 1 à 8, caractérisé en ce que le précurseur est sous forme d'une fibre silicoalumineuse.

13. Procédé de formation d'un revêtement céramique à base de Sialon sur un substrat réfractaire, selon l'une quelconque des revendication 1 à 11, caractérisé en ce qu'il comprend :
- la mise en suspension dans un véhicule liquide du précurseur aluminosilicaté,
- le dépôt de la suspension sur le substrat,
- l'élimination du véhicule liquide, et
- la réduction du précurseur.

14. Procédé de formation d'un revêtement céramique à base de Sialon sur les fibres d'un substrat fibreux réfractaire, selon l'une quelconque des revendications 1 à 11, caractérisé en ce qu'il comprend :
- la mise en suspension dans un véhicule liquide du précurseur aliminosilicaté,
- l'imprégnation du substrat fibreux par suspension,
- l'élimination du véhicule liquide, et
- la réduction du précurseur.

15. Procédé selon la revendication 14, caractérisé en ce que les phases d'imprégnation, d'élimination du véhicule liquide et de réduction du précurseur sont répétées.

16. Procédé selon l'une quelconque des revendications 13 à 15, caractérisé en ce que le précurseur est une argile à texture lamellaire.

17. Procédé selon la revendication 16, caractérisé en ce que le précurseur est de la kaolinite.

## Patentansprüche

1. Verfahren zur Herstellung eines keramischen Materials auf der Basis von Sialon durch Zusammenbringen eines Aluminosilikat-Vorprodukts mit einer Gasphase, die Stickstoff, Wasserstoff und eine Kohlenstoffverbindung enthält,
**dadurch gekennzeichnet**,
daß das Vorprodukt durch eine Gasphase reduziert wird, die im wesentlichen ein Gemisch aus Wasserstoff und Stickstoff enthält, wobei das Gemisch mit einer Kohlenstoffverbindung dotiert ist, deren Anteil in der Gasphase dergestalt beschränkt ist, daß die Bildung von elementarem Kohlenstoff vermieden wird.

2. Verfahren nach Anspruch 1,
**dadurch gekennzeichnet**,
daß die Kohlenstoffverbindung ein Gas ist, das Kohlenstoff in gebundener Form enthält, dessen Volumenanteil in der Gasphase unterhalb von 3 % liegt.

3. Verfahren nach Anspruch 1 oder 2,
**dadurch gekennzeichnet**,
daß die Kohlenstoffverbindung ein Kohlenwasserstoff ist.

4. Verfahren nach einem der Ansprüche 1 bis 3,
**dadurch gekennzeichnet**,
daß die Kohlenstoffverbindung ein Alkan ist.

5. Verfahren nach einem der Ansprüche 1 bis 4,
**dadurch gekennzeichnet**,
daß die jeweiligen Volumenanteile von Wasserstoff und Stickstoff in der Gasphase in einem Bereich zwischen 0,1 und 10 liegen.

6. Verfahren nach einem der Ansprüche 1 bis 5,
**dadurch gekennzeichnet**,
daß die Reduktion des Vorprodukts bei einer Temperatur von mindestens 1100°C durchgeführt wird.

7. Verfahren nach einem der Ansprüche 1 bis 6,
**dadurch gekennzeichnet**,
daß das Vorprodukt in einem Behälter angeordnet wird, in den ein das Gemisch aus Wasserstoff und Stickstoff enthaltender Gasstrom unter Zugabe der Kohlenstoffverbindung eingeführt wird.

8. Verfahren nach einem der Ansprüche 1 bis 6,
**dadurch gekennzeichnet**,
daß das Vorprodukt in einem Behälter angeordnet wird, in den ein das Gemisch aus Wasserstoff und Stickstoff enthaltender Gasstrom eingeführt wird, wobei ein kohlenstoffhaltiger Feststoff in dem Behälter auf dem Weg des Gasstroms stromaufwärts von dem Vorprodukt vorgesehen wird.

9. Verfahren nach einem der Ansprüche 1 bis 8,
**dadurch gekennzeichnet**,
daß das Aluminosilikat-Vorprodukt ein Ton ist.

10. Verfahren nach einem der Ansprüche 1 bis 8,
**dadurch gekennzeichnet**,
daß das Vorprodukt in Gestalt eines Pulvers vorliegt.

11. Verfahren nach Anspruch 10,
**dadurch gekennzeichnet**,
daß das Vorprodukt ausgewählt ist aus einem Gemisch von Tonerde- und Kieselerde-Pulvern, das mittels Sol-Gel-Verfahren erhalten wurde.

12. Verfahren nach einem der Ansprüche 1 bis 8,
**dadurch gekennzeichnet**,
daß das Vorprodukt in Gestalt einer Tonerdesilikat-Faser vorliegt.

13. Verfahren zur Bildung einer keramischen Beschichtung auf der Basis von Sialon auf einem feuerfesten Substrat gemäß einem der Ansprüche 1 bis 11,
**dadurch gekennzeichnet**,
daß es aufweist:
- das In-Suspension-Bringen des Aluminosilikat-Vorprodukts in einem flüssigen Lösungsmittel,
- die Abscheidung der Suspension auf dem Substrat,
- die Entfernung des flüssigen Lösungsmittels, und
- die Reduktion des Vorprodukts.

14. Verfahren zur Bildung einer keramischen Beschichtung auf der Basis von Sialon auf den Fasern eines feuerfesten Fasersubstrats gemäß einem der Ansprüche 1 bis 11,
**dadurch gekennzeichnet**,
daß es aufweist:
- das In-Suspension-Bringen des Aluminosilikat-Vorprodukts in einem flüssigen Lösungsmittel,
- das Imprägnieren des Fasersubstrats mit der Suspension,
- die Entfernung des flüssigen Lösungsmittels, und
- die Reduktion des Vorprodukts.

15. Verfahren nach Anspruch 14,
**dadurch gekennzeichnet**,
daß die Schritte des Imprägnierens, der Entfernung des flüssigen Lösungsmittels und der Reduktion des Vorprodukte wiederholt werden.

16. Verfahren nach einem der Ansprüche 13 bis 15,
**dadurch gekennzeichnet**,
daß das Vorprodukt ein Ton mit Lamellenstruktur ist.

17. Verfahren nach Anspruch 16,
**dadurch gekennzeichnet**,
daß das Vorprodukt Kaolinit ist.

## Claims

1. A method of obtaining a Sialon-based ceramic material by bringing an aluminosilicate precursor together with a gas comprising nitrogen, hydrogen and a carbon compound,
characterized in that the precursor is reduced by a gas that mainly comprises a mixture of hydrogen and of nitrogen doped with a carbon compound whose concentration in the gas is limited so as to avoid the formation of elemental carbon.

2. The method according to claim 1, characterized in that the carbon compound is a gas containing carbon in combined form, at a concentration by volume in the gas of less than 3%.

3. The method according to any one of claims 1 and 2, characterized in that the carbon compound is a hydrocarbon.

4. The method according to any one of claims 1 to 3, characterized in that the carbon compound is an alkane.

5. The method according to any one of claims 1 to 4, characterized in that the respective concentrations by volume of hydrogen and of nitrogen in the gas lie in the range 0.1 to 10.

6. The method according to any one of claims 1 to 5, characterized in that the precursor is reduced at a temperature of not less than 1100°C.

7. The method according to any one of claims 1 to 6, characterized in that the precursor is placed in an enclosure into which a flow of gas is inserted, the gas comprising the mixture of hydrogen and of nitrogen plus the carbon compound.

8. The method according to any one of claims 1 to 6, characterized in that the precursor is placed in an enclosure into which a flow of gas is inserted, the gas containing the mixture of hydrogen and of nitrogen, a carbon-containing solid material being placed inside the enclosure on the path of the gas flow, upstream from the precursor.

9. The method according to any one of claims 1 to 8, characterized in that the aluminosilicate precursor is a clay.

10. The method according to any one of claims 1 to 8, characterized in that the precursor is in powder form.

11. The method according to claim 10, characterized in that the precursor is selected from a mixture of alumina and silica powders obtained by the sol-gel method.

12. The method according to any one of claims 1 to 8, characterized in that the precursor is in the form of an aluminosilicate fiber.

13. The method of forming a Sialon-based ceramic coating on a refractory substrate, the method being according to any one of claims 1 to 11 and being characterized in that it comprises:
- putting the aluminosilicate precursor into suspension in a liquid vehicle;
- depositing the suspension on the substrate;
- eliminating the liquid vehicle; and
- reducing the precursor.

14. The method of forming a Sialon-based ceramic coating on the fibers of a refractory fiber substrate, the method being according to any one of claims 1 to 11 and being characterized in that it comprises:
- putting the aluminosilicate precursor into suspension in a liquid vehicle;
- impregnating the suspension in the fiber substrate;
- eliminating the liquid vehicle; and
- reducing the precursor.

15. The method according to claim 14, characterized in that the stages of impregnating, eliminating the liquid vehicle, and reducing the precursor are repeated.

16. The method according to any one of claims 13 to 15, characterized in that the precursor is a clay of lamellar texture.

17. The method according to claim 16, characterized in that the precursor is kaolinite.
